# EUROPÄISCHE PATENTSCHRIFT

(11) **EP 3 631 881 B1**
(45) Veröffentlichungstag und Bekanntmachung des Hinweises auf die Patenterteilung: **31.07.2024**
(21) Anmeldenummer: 18727274.5
(22) Anmeldetag: 24.05.2018
(51) Int. Cl.: H01M 4/58, H01M 10/052, H01M 10/0562, H01M 6/18, H01M 10/04, H01M 6/46, H01M 6/48

(54) **ENERGIESPEICHER**
STORED ENERGY SOURCE
ACCUMULATEUR D'ÉNERGIE

(30) Priorität: 31.05.2017 DE 102017111972
(43) Veröffentlichungstag der Anmeldung: 08.04.2020
(73) Patentinhaber: TDK Electronics AG, 81671 München (DE)
(72) Erfinder: KÖSTNER, Stefan, 7082 Donnerskirchen (AT); RINNER, Franz, 8523 Frauental an der Laßnitz (AT); OBERMAIR, Stefan, 8510 Stainz (AT); OISHI, Masahiro, 8530 Deutschlandsberg (AT)
(74) Vertreter: Epping - Hermann - Fischer
(86) Internationale Anmeldenummer: PCT/EP2018/063679
(87) Internationale Veröffentlichungsnummer: WO 2018/219783

(56) Entgegenhaltungen:
- EP-A1- 2 575 200
- WO-A1-2014/171309
- DE-A1- 102013 203 620
- US-A1- 2009 136 830
- US-A1- 2016 293 907
- RAMAKUMAR S ET AL: "Lithium garnets: Synthesis, structure, Li+conductivity, Li+dynamics and applications", PROGRESS IN MATERIALS SCIENCE, PERGAMON PRESS, GB, vol. 88, 8 April 2017 (2017-04-08), pages 325 - 411, XP085043054, ISSN: 0079-6425, DOI: 10.1016/J.PMATSCI.2017.04.007

## Beschreibung

Die Erfindung betrifft Energiespeicher, z. B. für elektrische Geräte, mit kleinen Abmessungen und hoher Energiedichte.

Energiespeicher dienen in elektrischen Geräten dazu, elektrische Schaltkreise unabhängig von einer externen Stromversorgung mit elektrischer Energie zu versorgen.

WO 2014 / 171 309 A1 zeigt eine Festkörperbatterie, die aus mehreren aufeinandergestapelten Zellen aufgebaut ist, wobei jede Zelle eine positive Elektrode sowie negative Elektroden aufweist, zwischen denen ein Festkörper-Elektrolyt angeordnet ist. Ferner zeigen DE 10 2013 203 620 A1 und US 2016 / 293 907 A1 weitere Energiespeicher.

Übliche tragbare elektrische Geräte können beispielsweise batteriebetrieben oder akkubetrieben sein. Für eine kurzfristige Energieversorgung stehen Kondensatoren zur Verfügung.

Problematisch an bekannten Energiespeichern ist beispielsweise deren geringe Energiedichte.

Es besteht deshalb der Wunsch nach verbesserten Energiespeichern.

Dazu wird im unabhängigen Anspruch 1 ein verbesserter Energiespeicher angegeben. Abhängige Ansprüche geben vorteilhafte Ausgestaltungen an.

Der Energiespeicher umfasst einen Lagenstapel mit einer ersten Elektrodenlage, einer zweiten Elektrodenlage und einer Elektrolytlage zwischen den Elektrodenlagen. In der ersten Elektrodenlage ist eine erste Elektrode gebildet. In der zweiten Elektrodenlage ist eine zweite Elektrode gebildet. In der Elektrolytlage ist ein Elektrolyt gebildet. Der Elektrolyt ist ein Festkörper.

Die Verwendung eines Festkörperelektrolyten in einem Energiespeicher macht den Energiespeicher praktisch wartungsfrei, da keinerlei flüssige Elektrolyte, die z. B. austreten oder ausgasen können, enthalten sind. Ferner ist ein solcher Energiespeicher, der z. B. vollständig aus festen Materialien ohne flüssige Bestandteile bestehen kann, temperaturbeständig und weniger stark entflammbar. Dies macht ihn besonders gut in tragbaren Geräten wie z. B. tragbaren Konsumgütern verwendbar. Im Übrigen bewirkt die hohe Temperaturbeständigkeit, dass übliche Prozessierungsschritte wie z. B. das Löten in einem Reflow-Lötprozess ohne besondere Rücksicht auf den Energiespeicher erfolgen kann.

Zusätzlich sind solche Energiespeicher in praktisch jeder beliebigen Form herstellbar. Da ihre Bestandteile aus dünnen Schichten bestehen können, kann die Gesamthöhe eines solchen Energiespeichers extrem gering sein. Die Energiedichte eines solchen Festkörper-Energiespeichers ist deshalb im Vergleich mit konventionellen Batterien oder Akkumulatoren deutlich vergrößert.

Der Energiespeicher weist zusätzlich eine erste aktive Lage und eine zweite aktive Lage auf. Die erste aktive Lage ist zwischen der ersten Elektrodenlage und der Elektrolytlage angeordnet. Die zweite aktive Lage ist zwischen der Elektrolytlage und der zweiten Elektrodenlage angeordnet. Die erste Elektrolytlage und die zweite Elektrolytlage sind dabei - genauso wie der Festkörper-Elektrolyt - durchlässig für Ionen.

Vorteilhafterweise ist der Festkörper-Elektrolyt nicht durchlässig für Elektronen.

Der Energiespeicher ist eine Festkörperbatterie oder ein - aufladbarer - Festkörperakkumulator.

Der Lagenstapel im Energiespeicher stellt quasi eine Zelle des Energiespeichers dar. Der Energiespeicher weist zusätzliche Zellen auf. Entsprechend weist der Energiespeicher mehrere solche Lagenstapel auf. Die Lagenstapel sind dabei zu einem Block zusammengefasst. Der Block stellt eine Versorgungsspannung bereit.

Jeder Lagenstapel hat dabei einen Festkörper-Elektrolyt zwischen zwei Elektrodenlagen.

Der Energiespeicher umfasst einen oder mehrere zusätzliche solche Blöcke, wobei jeder der Blöcke eine eigene Versorgungsspannung bereitstellt.

Es ist möglich, dass die Lagenstapel innerhalb eines Blocks parallelgeschaltet sind. Weiterhin ist es möglich, dass die Blöcke in Serie verschaltet sind.

Alternativ ist es möglich, dass die Lagenstapel innerhalb eines Blocks in Serie geschaltet sind. Alle Blöcke können relativ zueinander parallel verschaltet sein.

Zusätzlich ist es auch möglich, dass sowohl die Lagenstapel innerhalb eines Blocks als auch die einzelnen Blöcke parallelgeschaltet sind. Ferner ist es möglich, dass sowohl die Lagenstapel innerhalb eines Blocks als auch die einzelnen Blöcke in Serie geschaltet sind.

Durch die Vielzahl an unterschiedlichen Kombinationen an Serien- und/oder Parallelverschaltungen einzelner Lagenstapel und einzelner Blöcke ergibt sich eine Vielzahl an Möglichkeiten, unterschiedliche Gesamtspannungen und unterschiedliche Kapazitäten bereitzustellen.

Die Materialzusammensetzungen der Elektroden, der Elektrolyte und der aktiven Lagen ist dabei vorteilhafterweise so gewählt, dass die Energiedichte des Energiespeichers als Ganzes maximiert ist.

Während Parallel- und Serienverschaltungen konventioneller Batterien bisher auch möglich waren, so war die Auswahl an Materialien für die verschiedenen Bestandteile einer Batterie im Wesentlichen darauf ausgelegt, bestimmte oder maximale Zellspannungen zu erhalten.

Da die Lagenanordnung des vorliegenden Energiespeichers durch die komplexen Möglichkeiten aus Serien- und Parallelverschaltungen jede praktisch sinnvolle Versorgungsspannung ermöglichen können, entfällt der Bedarf, Materialien nach ihrer Zellspannung auszuwählen. Es ist deshalb möglich, die zugrundeliegenden Materialien der einzelnen Lagenstapel bezüglich alternativer Parameter, z. B. hoher Ströme, hoher Kapazitäten oder hoher Energiedichten zu wählen.

Insgesamt können damit die üblichen Versorgungsspannungen leicht bereitgestellt werden, während andererseits ein großer Zuwachs an Energiedichte und/oder Kapazität und/oder Maximalstrom möglich ist.

Bei einem hohen Kaskadierungsgrad, d. h. einer hohen Zahl an Serienverschaltungen zum Erreichen einer hohen Ausgangsspannung, nimmt der Serienwiderstand innerhalb des Energiespeichers zwar zu. Der Gewinn an Performance ist dabei größer, sodass selbst bei einer Überdimensionierung ein verbesserter Energiespeicher erhalten werden kann.

Selbst hohe Spannungen jenseits von 100 V als Ausgangsspannungen des Energiespeichers sind möglich.

Für jede erste bzw. zweite Elektrode eines Lagenstapels gibt es eine Sammelelektrode, mit der die jeweilige Elektrode verbunden ist. Sammelelektroden eines oder mehrerer Lagenstapel können Kupfer umfassen oder aus Kupfer bestehen.

Der Energiespeicher weist eine erste Sammelelektrode auf einer lateralen Seite des Lagenstapels und eine zweite Sammelelektrode auf der gegenüberliegenden Seite des Lagenstapels auf. Die erste Sammelelektrode ist dabei mit der ersten Elektrode des Lagenstapels verbunden und durch einen Leerraum von der zweiten Elektrode desselben Lagenstapels getrennt. Die zweite Sammelelektrode ist mit der zweiten Elektrode des Lagenstapels verbunden und durch einen Leerraum von der ersten Elektrode des Lagenstapels getrennt.

Die Sammelelektroden verschiedener Lagenstapel innerhalb eines Blocks können entsprechend in Serie oder parallel verschaltet sein. Sammelelektroden eines Blocks können ebenfalls mit Sammelelektroden anderer Blöcke in Serie oder parallel verschaltet sein.

Es ist vorteilhaft, wenn Elektroden, z. B. Sammelelektroden oder Elektroden innerhalb des Lagenstapels nicht porös und nicht ionenleitend sind. Wird Kupfer als solches Elektrodenmaterial verwendet, so kann das Material so abgeschieden werden, dass ein nicht poröses Kupfer erhalten wird.

Eine Isolation wird durch einen Leerraum erreicht, der während der Herstellung durch das Auffüllen mit einem Bindemittel entsteht. Das Bindemittel wird z. B. während eines Entbinderungs- und/oder Sintervorgangs nachträglich entfernt.

Die Außenseite des Energiespeichers kann aus einem Schutzmaterial, das z. B. weder für Ionen noch für Elektronen ein leitbares Material darstellt, gebildet sein. Alternativ oder zusätzlich ist es möglich, dass einige Stellen des Randbereichs des Energiespeichers durch das Material einer Sammelelektrode bedeckt sind. So können z. B. zwei gegenüberliegende Flächen des Energiespeichers jeweils mit Material zweier Sammelelektroden unterschiedlichen Potenzials bedeckt sein. Das Material der Sammelelektroden kann dabei die Kanten der bedeckten Seite überragen und mit anderen Teilen, z. B. der Mantelfläche, überlappen.

Als Material für den Festkörper-Elektrolyt kommt LAPT (eine Verbindung mit Lithium, Aluminium, Titan und Phosphor) in Frage. Als Material für eine aktive Lage kommt LPV (ein Material mit Lithium, Vanadium und Phosphor) in Frage.

Die Kapazitätsdichte des Energiespeichers kann 20 Wh/l, z. B. bei einer Zellspannung eines Lagenstapels von 1,8 V, betragen.

Ein solcher Energiespeicher kann Temperaturen bis 260° schadlos überstehen und ist damit gut geeignet, in Reflow-Prozessen mit einer externen Schaltungsumgebung verbunden und verschaltet zu werden.

Langfristig sind Temperaturen von etwas über 80 °C während einer Dauerbelastung unproblematisch.

Arbeitsprinzipien des Energiespeichers und Details von Ausführungsformen sind in den schematischen Figuren näher erläutert.

Es zeigen:
- Fig. 1:: einen möglichen Aufbau eines Energiespeichers.
- Fig. 2:: einen Energiespeicher mit mehreren Lagenstapeln.
- Fig. 3:: einen Energiespeicher mit mehreren Blöcken.

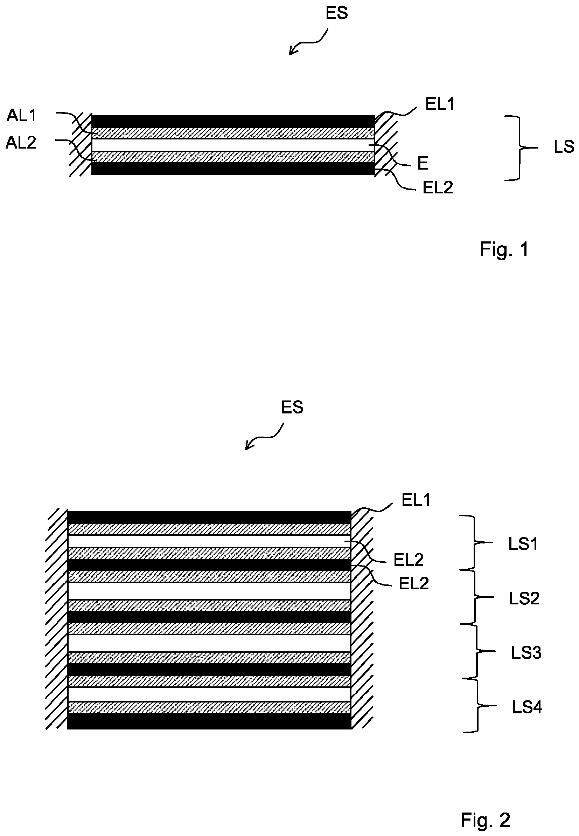

Figur 1 zeigt einen Energiespeicher ES mit einer ersten Elektrode EL1 in einer ersten Elektrodenlage und einer zweiten Elektrode EL2 in einer zweiten Elektrodenlage. Zwischen der ersten Elektrode EL1 und der zweiten Elektrode EL2 ist ein Elektrolyt E in einer Elektrolytlage angeordnet.

Der Elektrolyt E trennt die beiden Elektroden EL1, EL2 räumlich voneinander und ist vorzugsweise leitfähig für Ionen. An den beiden Elektroden EL1, EL2 kann eine Spannung abgegriffen werden, die z. B. zum Betrieb eines elektrischen Geräts verwendet werden kann.

Die Spannung zwischen den Elektroden EL1, EL2 hängt von der Auswahl der Materialien ab. Die Materialien können so ausgewählt sein, dass nicht unbedingt eine maximale Spannung am Lagenstapel abfällt, sondern eine maximale Energiedichte im Lagenstapel speicherbar oder eine maximale Stromstärke aus dem Lagenstapel abrufbar ist.

Zwischen der ersten Elektrode EL1 und dem Elektrolyt E kann eine erste aktive Lage AL1 angeordnet sein. Zwischen dem Elektrolyt E und der zweiten Elektrode EL2 kann eine zweite aktive Lage AL2 angeordnet sein. Die zwei aktiven Lagen AL1, AL2 sind vorzugsweise durchlässig für die Ionen, die der Elektrolyt E ebenfalls passieren lässt. Zumindest eine der Lagen AL1, E, AL2 ist dabei nicht transparent für Elektronen. Anderenfalls wären die zwei Elektroden EL1, EL2 kurzgeschlossen.

Die zwei Elektroden, der Elektrolyt und gegebenenfalls die aktiven Lagen bilden zusammen ein Lagensystem LS.

Figur 2 zeigt die Möglichkeit, Lagenstapel LS, wie z. B. in Fig. 1 gezeigt, zusammen in einem Energiespeicher anzuordnen. Die Anordnung kann dabei nebeneinander oder - wie in Figur 2 gezeigt - übereinander erfolgen. So sind in Figur 2 vier Lagenstapel LS1, LS2, LS3, LS4 übereinander angeordnet.

Prinzipiell ist es möglich, Lagenstapel in Serie oder parallel zu verschalten. Es ist auch möglich, dass einige Lagenstapel in Serie und einige Lagenstapel parallel verschaltet sind. Parallelverschaltungen von Lagenstapeln un Serienverschaltungen von Lagenstapeln können ebenfalls in Serie oder parallel verschaltet sein.

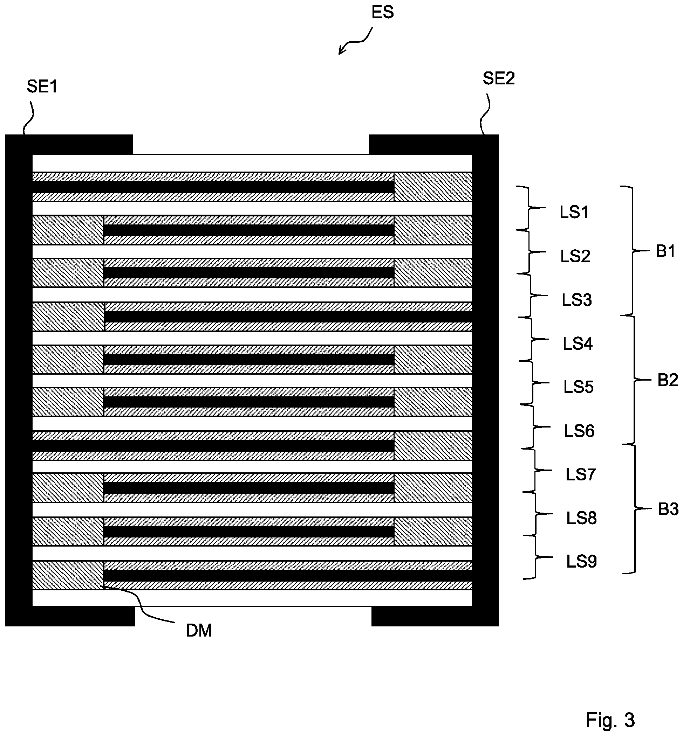

Figur 3 zeigt entsprechend eine Ausgestaltung, bei der ein erster Lagenstapel LS1, ein zweiter Lagenstapel LS2 und ein dritter Lagenstapel LS3 zu einem ersten Block B1 verschaltet sind. Die Lagenstapel sind dabei in Serie verschaltet. Ein vierter Lagenstapel LS4, ein fünfter Lagenstapel LS5 und ein sechster Lagenstapel LS6 sind in Serie zu einem zweiten Block B2 verschaltet. Ein siebter Lagenstapel LS7, ein achter Lagenstapel LS8 und ein neunter Lagenstapel LS9 sind in Serie zu einem dritten Block B3 verschaltet.

Der erste Block B1, der zweite Block B2 und der dritte Block B3 sind parallel verschaltet. Entsprechend stellen die beiden Sammelelektroden SE1, SE2 eine Versorgungsspannung zur Verfügung, die der dreifachen Spannung eines einzelnen Lagenstapels entspricht. Die Kapazität des gesamten Energiespeichers ES bei der Arbeitsspannung entspricht der dreifachen Kapazität eines einzelnen Blocks B.

Nebeneinander angeordnete Lagenstapel teilen sich Material einer Elektrodenlage. Durch geeignete Wahl des Lagenstapels kann daher unnötiges Material, z. B. Elektrolytmaterial oder Inertmaterial, Anodenmaterial oder Kathodenmaterial, eingespart werden im Vergleich mit einer entsprechenden, gleich wirkenden Serien- und/oder Parallelverschaltung von Einzelbauteilen. Dies führt zu entsprechender Kosten-, Gewichts- und Platzersparnis.

In jedem Block B1, B2, B3 gibt es genau eine Elektrode, die mit jeder der beiden Sammelelektroden verschaltet ist.

Jede Elektrodenlage aller Lagenstapel ist zumindest auf einer Seite von einer Sammelelektrode durch ein dielektrisches Material DM isoliert. Das dielektrische Material ist vorzugsweise nicht oder höchstens schlecht ionenleitend.

Der Energiespeicher ist nicht auf die gezeigten Ausführungsformen beschränkt. Energiespeicher können ferner zusätzliche Schichten und Lagenstapel und Sammelelektroden aufweisen.

### Bezugszeichenliste

- AL1:: erste aktive Lage
- AL2:: zweite aktive Lage
- B1, B2, B3:: erster, zweiter, dritter Block
- DM:: dielektrisches Material
- E:: Elektrolyt
- EL1:: erste Elektrode
- EL2:: zweite Elektrode
- ES:: Energiespeicher
- LS:: Lagenstapel
- SE1, SE2:: erste, zweite Sammelelektrode

## Patentansprüche

1. Energiespeicher (ES), umfassend
- einen Lagenstapel (LS) mit einer ersten Elektrodenlage, einer zweiten Elektrodenlage und einer Elektrolytlage zwischen den Elektrodenlagen, wobei
- eine erste Elektrode (EL1) in der ersten Elektrodenlage gebildet ist,
- eine zweite Elektrode (EL2) in der zweiten Elektrodenlage gebildet ist,
- ein Elektrolyt (E) in der Elektrolytlage gebildet ist und
- der Elektrolyt (E) ein Festkörper ist,
ferner umfassend
- eine erste aktive Lage (AL1) zwischen der ersten Elektrodenlage und der Elektrolytlage und
- eine zweite aktive Lage (AL2) zwischen der Elektrolytlage und der zweiten Elektrodenlage,
wobei
- die erste (AL1) und die zweite (AL2) aktive Lage durchlässig für Ionen sind,
- der Energiespeicher eine Festkörperbatterie oder ein Festkörperakkumulator ist,
ferner umfassend
- einen oder mehr zusätzliche Lagenstapel (LS), die zu einem Block (B1) zusammengefasst sind, der eine eigene Versorgungsspannung bereitstellt,
wobei der Energiespeicher eine erste Sammelelektrode (SE1) auf einer lateralen Seite des Lagenstapels (LS) und eine zweite Sammelelektrode (SE2) auf der gegenüberliegenden Seite des Lagenstapels (LS) umfasst,
wobei die erste Sammelelektrode (SE1) mit der ersten Elektrode (EL1) des Lagenstapels (LS) verbunden und durch einen Leerraum von der zweiten Elektrode (EL2) des Lagenstapels (LS) getrennt ist und
wobei die zweite Sammelelektrode (SE2) mit der zweiten Elektrode (EL2) des Lagenstapels (LS) verbunden und durch einen Leerraum von der ersten Elektrode (EL1) des Lagenstapels (LS) getrennt ist.

2. Energiespeicher nach dem vorherigen Anspruch, ferner umfassend einen oder mehr zusätzliche Blöcke (B1, B2, B3), die jeweils eine eigene Versorgungsspannung bereitstellen.

3. Energiespeicher nach dem vorherigen Anspruch,
- bei dem die Lagenstapel (LS) eines Blocks (B1, B2, B3) parallel geschaltet sind und
- bei dem die Blöcke (B1, B2, B3) in Serie verschaltet sind.

4. Energiespeicher nach einem der vorherigen Ansprüche, bei dem die erste Sammelelektrode (SE1) und die zweite Sammelelektrode (SE2) Kupfer umfassen.

## Claims

1. Energy store (ES), comprising
- a layer stack (LS) having a first electrode layer, a second electrode layer, and an electrolyte layer between the electrode layers, wherein
- a first electrode (EL1) is formed in the first electrode layer,
- a second electrode (EL2) is formed in the second electrode layer,
- an electrolyte (E) is formed in the electrolyte layer, and
- the electrolyte (E) is a solid-state electrolyte, further comprising
- a first active layer (AL1) between the first electrode layer and the electrolyte layer, and
- a second active layer (AL2) between the electrolyte layer and the second electrode layer,
wherein
- the first (AL1) and the second (AL2) active layer are permeable to ions,
- the energy store is a solid-state battery or a solid-state accumulator,
further comprising
- one or more additional layer stacks (LS) which are combined to form a block (B1) which provides its own supply voltage,
wherein the energy store comprises a first collecting electrode (SE1) on a lateral side of the layer stack (LS), and a second collecting electrode (SE2) on the opposite side of the layer stack (LS),
wherein the first collecting electrode (SE1) is connected to the first electrode (EL1) of the layer stack (LS) and is separated from the second electrode (EL2) of the layer stack (LS) by a void, and
wherein the second collecting electrode (SE2) is connected to the second electrode (EL2) of the layer stack (LS) and is separated from the first electrode (EL1) of the layer stack (LS) by a void.

2. Energy store according to the preceding claim, further comprising one or more additional blocks (B1, B2, B3) which each provide their own supply voltage.

3. Energy store according to the preceding claim,
- in which the layer stacks (LS) of a block (B1, B2, B3) are connected in parallel, and
- in which the blocks (B1, B2, B3) are interconnected in series.

4. Energy store according to one of the preceding claims, in which the first collecting electrode (SE1) and the second collecting electrode (SE2) comprise copper.

## Revendications

1. Accumulateur d'énergie (ES), comprenant
- un empilement de couches (LS) comportant une première couche d'électrode, une deuxième couche d'électrode et une couche d'électrolyte entre les couches d'électrode,
- une première électrode (EL1) étant formée dans la première couche d'électrode,
- une deuxième électrode (EL2) étant formée dans la deuxième couche d'électrode,
- un électrolyte (E) étant formé dans la couche d'électrolyte et
- l'électrolyte (E) étant une matière solide, comprenant en outre
- une première couche active (AL1) entre la première couche d'électrode et la couche d'électrolyte et
- une deuxième couche active (AL2) entre la couche d'électrolyte et la deuxième couche d'électrode,
- la première couche active (AL1) et la deuxième couche active (AL2) étant perméables aux ions,
- l'accumulateur d'énergie étant une batterie solide ou un accumulateur solide,
comprenant en outre
- un ou plusieurs empilements de couches supplémentaires (LS) qui sont regroupés en un bloc (B1) qui fournit sa propre tension d'alimentation, l'accumulateur d'énergie comprenant une première électrode collectrice (SE1) sur un côté latéral de l'empilement de couches (LS) et une deuxième électrode collectrice (SE2) sur le côté opposé de l'empilement de couches (LS),
la première électrode collectrice (SE1) étant reliée à la première électrode (EL1) de l'empilement de couches (LS) et étant séparée de la deuxième électrode (EL2) de l'empilement de couches (LS) par un espace vide et
la deuxième électrode collectrice (SE2) étant reliée à la deuxième électrode (EL2) de l'empilement de couches (LS) et étant séparée de la première électrode (EL1) de l'empilement de couches (LS) par un espace vide.

2. Accumulateur d'énergie selon la revendication précédente, comprenant en outre un ou plusieurs blocs supplémentaires (B1, B2, B3) qui fournissent chacun leur propre tension d'alimentation.

3. Accumulateur d'énergie selon la revendication précédente, dans lequel
- les empilements de couches (LS) d'un bloc (B1, B2, B3) sont montés en parallèle et
- les blocs (B1, B2, B3) sont montés en série.

4. Accumulateur d'énergie selon l'une des revendications précédentes, dans lequel la première électrode collectrice (SE1) et la deuxième électrode collectrice (SE2) comprennent du cuivre.
